# EUROPÄISCHE PATENTANMELDUNG

(11) **EP 4 446 524 A1**
(43) Veröffentlichungstag der Anmeldung: **16.10.2024**
(21) Anmeldenummer: 24163884.0
(22) Anmeldetag: 15.03.2024
(51) Int. Cl.: E04H 4/12, F16L 47/02

(54) **EINBAUTEIL FÜR EIN WASSERBECKEN**

(30) Priorität: 12.04.2023 DE 102023109130
(71) Anmelder: MTS Produkte für den Schwimmbadbau und die Unterwassertechnik GmbH, 40885 Ratingen (DE)
(72) Erfinder: Schydlo, Marc, 47269 Duisburg (DE)
(74) Vertreter: RGTH

(57) **Zusammenfassung**

Aus einem Einbauteil für ein Wasserbecken eines Teiches oder Schwimmbadbeckens und einem Klebeflansch bestehende Einheit, bei der sowohl das Einbauteil als auch der Klebeflansch aus einem Hart-Thermoplast-Kunststoff bestehen, die wasserdicht miteinander verbunden sind.

## Beschreibung

Aus einem Einbauteil für ein Wasserbecken eines Teiches oder Schwimmbadbeckens und einem Klebeflansch bestehende Einheit.

Die im vorliegenden Fall angesprochenen Wasserbecken bestehen in der Regel aus einem gefliesten Mauerwerk, das die Teich- oder Schwimmbadwandungen bildet. Solche Becken, insbesondere, wenn sie im Haus-Innenbereich angeordnet sind, müssen wasserdicht sein, um ein Eindringen der Feuchtigkeit in das Mauerwerk und daraus folgende Schädigungen zu verhindern. Insbesondere Schwimmbäder weisen vorgefertigte Einbauteile auf, die in die Wandung oder den Boden eingebaut werden. Solche Einbauteile sind Bodenabläufe, Skimmer, Unterwasserscheinwerfer, Einströmdüsen oder sonstige Rohre zum Flüssigkeitsablauf und zum Flüssigkeitszulauf. Alle genannten Einbauteile erfordern Wand- oder Bodendurchbrüche, die ebenfalls wasserdicht sein müssen. Es ist daher grundsätzlich bekannt, solche Einbauteile mit Klebeflanschen zu versehen, um die geforderte Verbund-Abdichtung gemäß bestehender DIN-Normen zu gewährleisten. Die Kragenbreite bekannter Klebe- oder Streichflansche liegt bei 50 mm. Diese Kragenbreite ermöglicht beispielsweise das Aufkleben von Fliesen, die vollflächig auf dem Flanschkragen verklebt werden, um einen wasserdichten Verbund zu gewährleisten. Bei allen im Schwimmbadbau verwendeten Einbauteile wird eine hohe Korrosionsbeständigkeit gegenüber gechlortem Wasser gefordert. Dies gilt auch für Teichbecken, die häufig einen basischem pH-Wert des Wassers besitzen. Ebenso wesentlich sind Zug- und Druckfestigkeit der Einbauteil-Komponente, die zwangsläufig, insbesondere im Außenbereich bei großen Temperaturschwankungen auftreten.

Häufig werden für die Einbauteile und/oder Klebeflansche metallische Werkstoffe, insbesondere Edelstahl, Messing oder Bronze oder auch eloxiertes Aluminium verwendet. Werden solche Einbauteile oder Klemmflansche beim Einbau beschädigt, kann dies die Korrosionsbeständigkeit erheblich minimieren.

Es ist Aufgabe der vorliegenden Erfindung, eine verbesserte Wasserdichtigkeit zum Bau- bzw. Mauerwerk der aus einem Einbauteil und einem Klebeflansch bestehenden Einheit zu gewährleisten.

Diese Aufgabe wird durch die Einheit nach Anspruch 1 gelöst, bei der sowohl das Einbauteil als auch der Klebeflansch aus einem Hart-Thermoplast-Kunststoff besteht, die wasserdicht miteinander verbunden sind.

Die Verwendung einer solchen Einheit zum Ausrüsten oder Nachrüsten eines Schwimmbad- oder Teichbeckens hat den Vorteil, das bereits werksseitig eine optimale Verbindung des Einbauteils und des Klebeflansches geschaffen werden kann, womit Montagefehler bei der Anbringung des Klemmflansches an das Einbauteil vermieden werden. Hart-Thermoplast-Kunststoff besitzt gegenüber metallischen Werkstoffen den Vorteil einer hohen Korrosionsbeständigkeit, die auch durch etwaige Kratzer oder sonstige kleinere Beschädigungen nicht beeinträchtigt werden kann.

In Fachkreisen wurde die alterungs-, licht- und witterungsbedingte Sprödigkeit von Kunststoff, die dem Tageslicht ausgesetzt sind, als Nachteil angegeben, welche der Verwendung von Kunststoff entgegenstehe. In der Praxis hat sich jedoch gezeigt, dass diese Wirkung bei Einbauteilen, die unterhalb des Wasserspiegels liegen, nicht eintritt.

Vorzugsweise bestehen der Klebeflansch und/oder das Einbauteil aus Hart-PVC (PVC-U). Diese Materialien sind preiswert und in beliebigen Größen und Wanddicken sowie allen gewünschten Formen durch Spritzgießen preiswert herstellbar.

Die Verbindung zwischen dem Einbauteil und dem Klebeflansch ist nach einer Weiterbildung der Erfindung eine Klebstoffverbindung auf Epoxidharzbasis, eine Methacrylat-Klebstoffverbindung, eine Cyanacrylat-Klebstoffverbindung oder eine quellschweißende Klebstoffverbindung, die jeweils vollflächig aufgetragen worden ist.

Anders als bei einer nachträglichen Befestigung des Klebeflansches am Einbauteil nach dem Einbau des Einbauteils können sowohl der vollflächige Auftrag des Klebstoffes als auch die optimalen Aushärtbedingungen in optimaler Weise gewährleistet werden.

Alternativ ist es möglich, das Einbauteil und den Klebeflansch durch Kaltverschweißung zu verbinden.

Wie bereits erwähnt, ist das Einbauteil vorzugsweise ein Gehäuse für einen Unterwasserscheinwerfer, für eine Einströmdüse, einen Bodenablauf oder für einen Skimmer.

Um zu verhindern, dass beim Einbau verwendeter Mörtel oder sonstiges benutztes Verbundmaterial in das Einbauteilinnere gelangen, sind vorhandene Öffnungen des Einbauteils mit einer lösbaren Kappe verschlossen. Nach erfolgtem Einbau und dem Abschluss der Nachbearbeitungen der Umgebung des Einbauteils durch Befestigung von Fliesen, Blenden etc. kann die Kappe entfernt werden.

Schließlich besitzt der Klebeflansch bevorzugt eine Kragenbreite von mindestens 60 mm, vorzugsweise zwischen 60 mm und 70 mm. Diese Maßnahme verbessert gegenüber herkömmlichen verwendeten Kragenbreiten die Dichtigkeit der Klebeverbindung.

Ein Ausführungsbeispiel der Erfindung ist in den Zeichnungen dargestellt.

Es zeigen:
- Fig. 1a: eine aus einer Beckenwanddurchführung und einem Klebeflansch bestehende Einheit in einer Querschnittsansicht,
- Fig. 1b: dieselbe Querschnittsansicht in eingebautem Zustand und
- Fig. 1c: drei Ansichten eines in Fig. 1a und Fig. 1b verwendeten Klebeflansches,
- Fig. 2a: eine aus einem Scheinwerfereinbaugehäuse und einem Klebeflansch bestehende Einheit,
- Fig. 2b: dieselbe Einheit im eingebauten Zustand,
- Fig. 2c: der in Fig. 2a und Fig. 2b verwendete Klebeflansch in drei verschiedenen Ansichten,
- Fig. 3a: eine aus einem Skimmergehäuse und einem Klebeflansch bestehende Einheit,
- Fig. 3b: dieselbe Einheit im eingebauten Zustand,
- Fig. 3c: der in Fig. 3a und Fig. 3b verwendete Klebeflansch in drei verschiedenen Ansichten,
- Fig. 4a: eine aus einem Klebeflansch und einem Bodenablauf bestehende Einheit,
- Fig. 4b: dieselbe Einheit im eingebauten Zustand und
- Fig. 4c: drei Ansichten des Klebeflansches nach Fig. 4a und Fig. 4b.

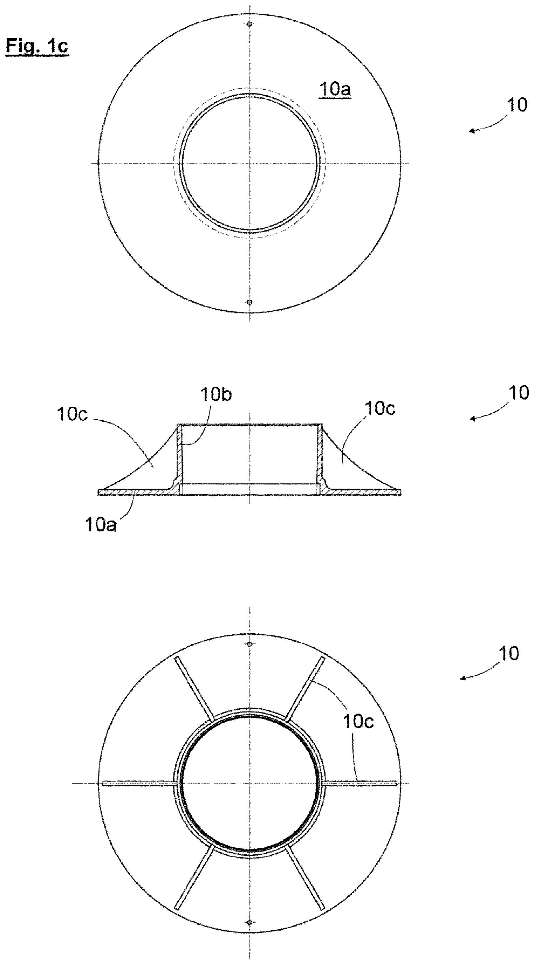

Wie aus den Fig. 1c, 2c, 3c und 4c hervorgeht, können die Klebeflansche, die einheitlich aus Hart-PVC bestehen, unterschiedliche Formen aufweisen. Einheitlich ist hier die Kragenbreite mit mindestens 60 mm.

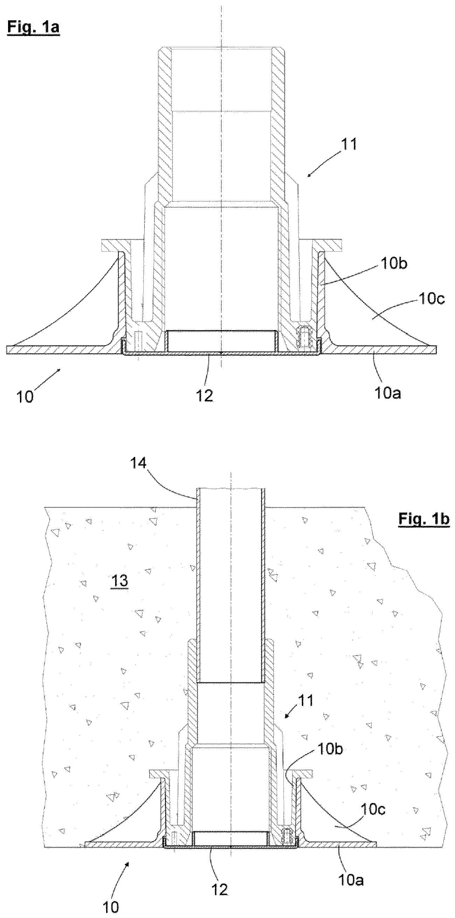

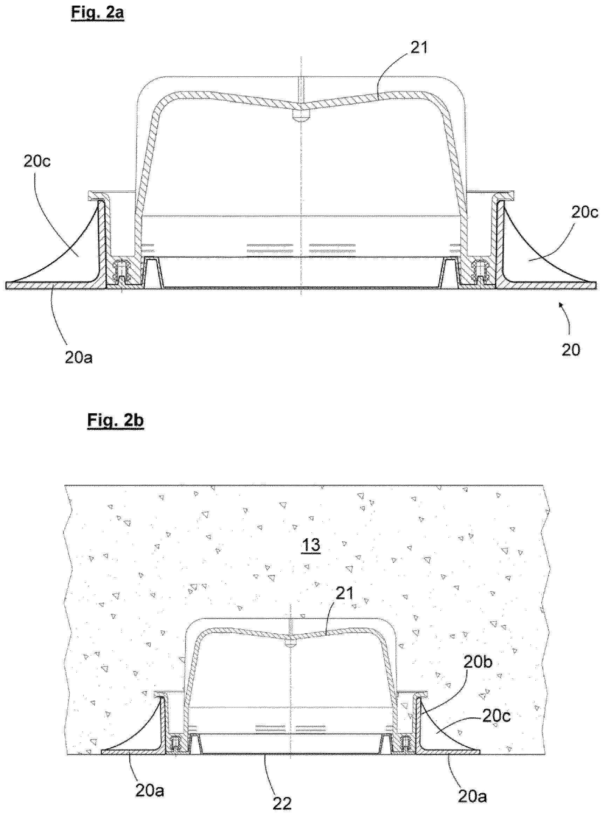

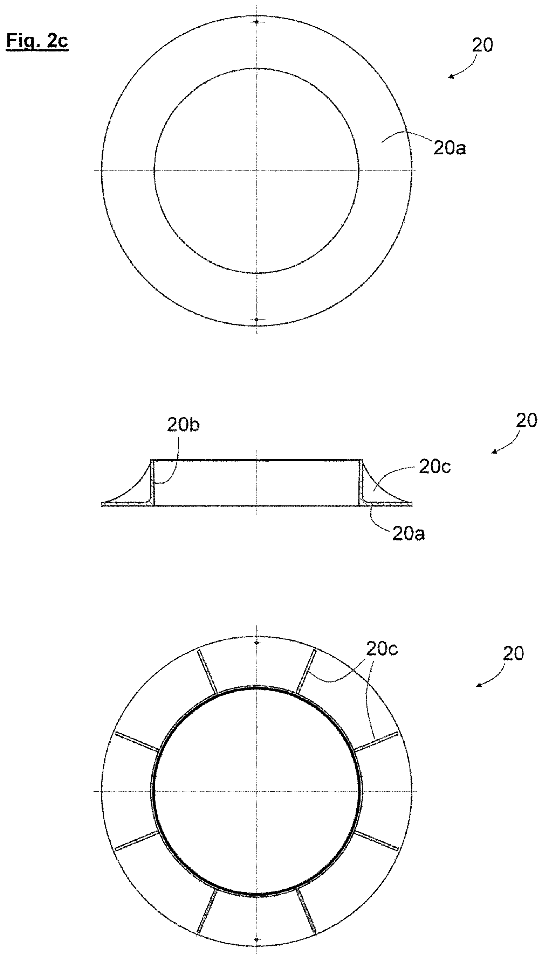

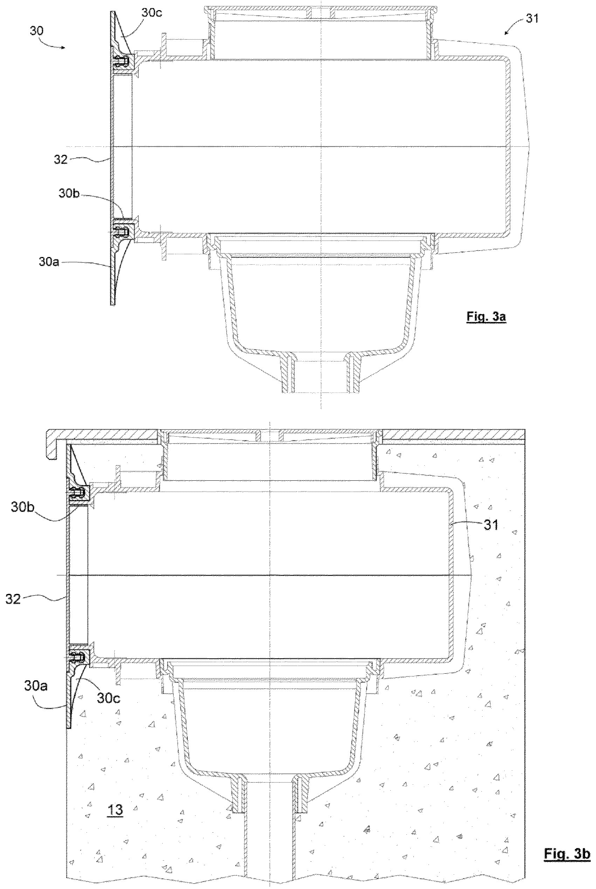

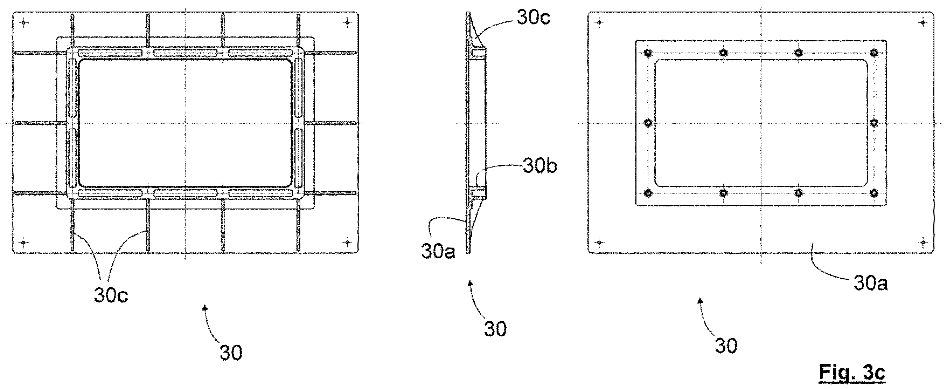

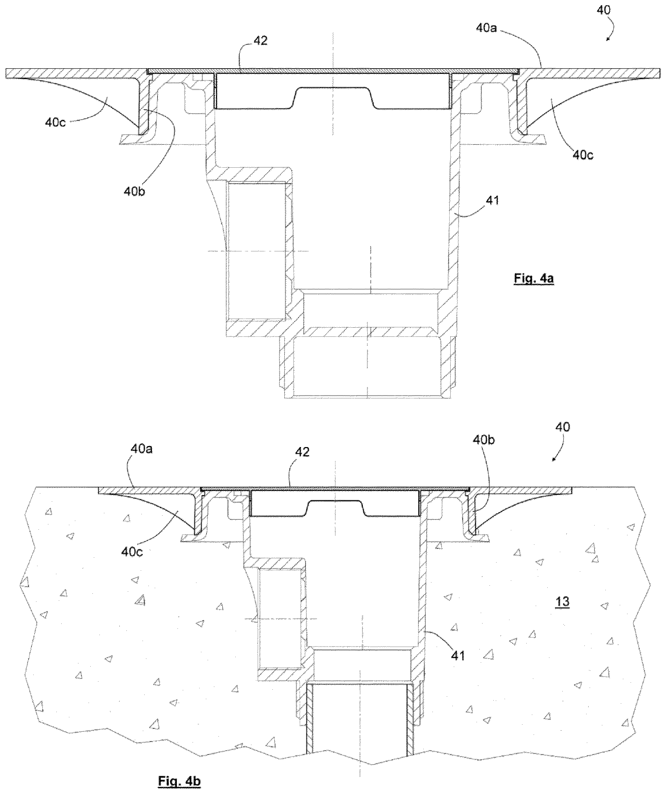

Ebenso wie die Klebeflansche bestehen auch die Beckenwanddurchführungen nach Fig. 1a, Fig. 1b, das Scheinwerfer-Einbaugehäuse nach Fig. 2a, Fig. 2b, das Skimmergehäuse nach Fig. 3a, Fig. 3b sowie der Bodenablauf nach Fig. 4a, Fig. 4b aus einem Thermoplast-Kunststoff. Der Klebeflansch und das jeweilige Einbauteil sind mittels genannter Klebestoffe oder durch eine Kaltverschweißung wasserdicht miteinander verbunden.

Vorteilhafterweise bilden das jeweilige Einbauteil sowie der Klebeflansch eine homogene Einheit mit einer ebenen Oberfläche ohne störende Schraubenköpfe. Eine schalungsbündige Montage ist wie in Fig. 1b, Fig. 2b, Fig. 3b beispielhaft dargestellt, möglich.

Der Klebeflansch besitzt, wie in Detail aus Fig. 1c ersichtlich, eine ringförmige glatte Oberfläche 10a sowie einen Zylinderkörper 10b mit einer Materialdicke von z.B. 4 mm. Zur Stabilisierung sind zusätzlich sechs sternförmig angeordnete Streben 10c vorgesehen. Ein vorhandener ringförmiger Absatz 10d dient zur Abstützung einer lösbaren Kappe 12. Der Streichflansch ist wie aus Fig. 1a und Fig. 1b ersichtlich in einer rohrförmigen Beckenwanddurchführung 11 befestigt, die in eine Kernbohrung der Schwimmbadbeckenwand 13 eingeschoben ist und die zur Aufnahme eines ebenfalls aus Hart-PVC bestehenden Rohres 14 dient. An den Stirnseiten 11a der im Querschnitt U-förmigen Beckenwanddurchführung 11 sind Gewindebohrungen vorgesehen, die zur Aufnahme von Schrauben zur etwa erforderlichen Befestigung von Folien, Blenden etc. dienen können.

Fig. 2a und Fig. 2b zeigen eine Einheit, bestehend aus einem Einbaugehäuse 21 für einen Unterwasserscheinwerfer und einem Klebeflansch 20. Im Wesentlichen unterscheidet sich der Klebeflansch 20 durch eine andere Dimensionierung des Zylinderkörpers 20b, der ringförmigen Oberfläche 20a und der sternförmig angeordneten Streben 20c. Diese andere Dimensionierung ist dem größeren Durchmesser des Einbaugehäuses 21 geschuldet. Eine Schutzkappe 22 deckt die vordere Öffnung des Einbaugehäuses 21 ab. Diese Schutzkappe, die lösbar aufgesteckt ist, kann vor dem Einbau des Scheinwerfers entfernt werden.

Fig. 3a und Fig. 3b zeigen eine Einheit, bestehend aus einem Skimmergehäuse 31 und einem Klebeflansch 30 die unlösbar miteinander verschweißt sind. Im Wesentlichen unterscheidet sich der Klebeflansch 30 durch eine andere Dimensionierung des rechteckigen Zylinderkörpers 30b, der rechteckigen, ringförmigen Oberfläche 30a und der angeordneten Streben 30c. Diese andere Dimensionierung ist den Abmessungen des Skimmergehäuses 31 geschuldet. Eine Schutzkappe 32 deckt die vordere Öffnung des Skimmergehäuses 31 ab. Diese Schutzkappe, die lösbar aufgesteckt ist, kann vor dem Einbau der Blenden oder der Folie entfernt werden.

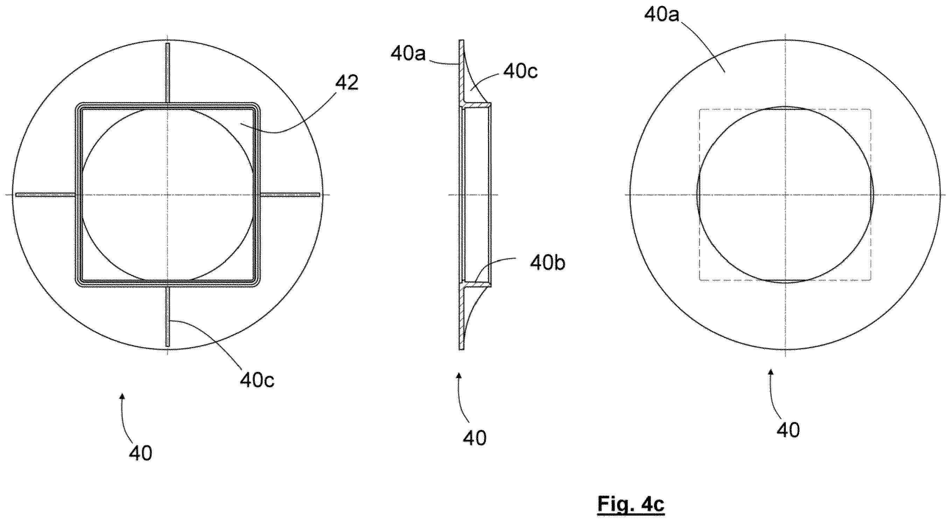

Fig. 4b zeigt einen Streichflansch 40 mit einer ringförmig glatten Oberfläche 40a sowie einem quadratischem Zylinderstück 40b und Verstärkungsstreben 40c. Dieser Streichflansch 40 ist mit einem Bodenablaufgehäuse 41 unlösbar verbunden. Der Bodenablauf wird durch eine aufgesetzte Schutzkappe 42 abgedeckt, die bündig mit dem Klebeflansch 40 abschließt. Der Bodenablauf kann beliebig zylinderförmig abgestuft sein. Wie aus Fig. 4c ersichtlich, besitzt die Schutzkappe 42 eine runde Oberfläche. In der rechten Abbildung der Fig. 4c ist der Klemmflansch 40 ohne Schutzkappe 42 dargestellt.

Die Klebeflansche 10, 20, 30, 40 können nach Aufbringen einer Wandverkleidung (z.B. durch Fliesen) vollständig abgedeckt werden, so dass die Klebeflansche sowie die hiermit verbundenen Einbauteile keinerlei UV-Strahlung ausgesetzt sind.

Das verwendete Hart-PVC ist beständig gegen Säuren oder Laugen und verfügt über eine geringe Wärmeleitfähigkeit.

### Bezugszeichenliste

- 10, 20, 30, 40: Klebeflansch
- 11, 21, 31, 41: Einbauteil
- 12, 22, 32, 42: Kappe
- 10a: Oberfläche des Klebeflansches
- 10b: Zylinderstück des Klebeflansches
- 10c: Verstärkungsstrebe

## Patentansprüche

1. Aus einem Einbauteil (11, 21, 31, 41) für ein Wasserbecken eines Teiches oder Schwimmbadbeckens und einem Klebeflansch (10, 20, 30, 40) bestehende Einheit, bei der sowohl das Einbauteil als auch der Klebeflansch aus einem Hart-Thermoplast-Kunststoff bestehen, die wasserdicht miteinander verbunden sind.

2. Einheit nach Anspruch 1, **dadurch gekennzeichnet, dass** der Klebeflansch (10, 20, 30, 40) und/oder das Einbauteil (11, 21, 31, 41) aus Hart-PVC (PVC-U) bestehen.

3. Einheit nach Anspruch 1 oder 2, **dadurch gekennzeichnet, dass** die Verbindung zwischen dem Einbauteil (11, 21, 31, 41) und dem Klebeflansch (10, 20, 30, 40) eine Klebstoffverbindung auf Epoxidharzbasis, eine Methacrylat-Klebstoffverbindung, eine Cyanacrylat-Klebstoffverbindung oder eine quellschweißende Klebstoffverbindung ist.

4. Einheit nach Anspruch 1 oder 2, **dadurch gekennzeichnet, dass** das Einbauteil (11, 21, 31, 41) und der Klebeflansch (10, 20, 30, 40) durch Kaltverschweißen verbunden sind.

5. Einheit nach einem der Ansprüche 1 bis 4, **dadurch gekennzeichnet, dass** das Einbauteil (11, 21, 31, 41) ein Gehäuse für einen Unterwasserscheinwerfer, eine Einströmdüse oder einen Skimmer ist.

6. Einheit nach einem der Ansprüche 1 bis 5, **dadurch gekennzeichnet, dass** Öffnungen des Einbauteils (11, 21, 31, 41) mit einer lösbaren Kappe (12, 22, 32, 42) verschlossen sind.

7. Einheit nach einem der Ansprüche 1 bis 6, **dadurch gekennzeichnet, dass** der Klebeflansch ((10, 20, 30, 40) eine Kragenbreite (10a, 20a, 30a, 40a) von mindestens 60 mm, vorzugsweise zwischen 60 mm und 70 mm hat.
